Europäisches Patentamt

European Patent Office

Office européen des brevets

(11) Publication number:

0 381 419
A2

# EUROPEAN PATENT APPLICATION

(21) Application number: 90300912.4

(51) Int. Cl.⁵: G06F 15/20

(22) Date of filing: 30.01.90

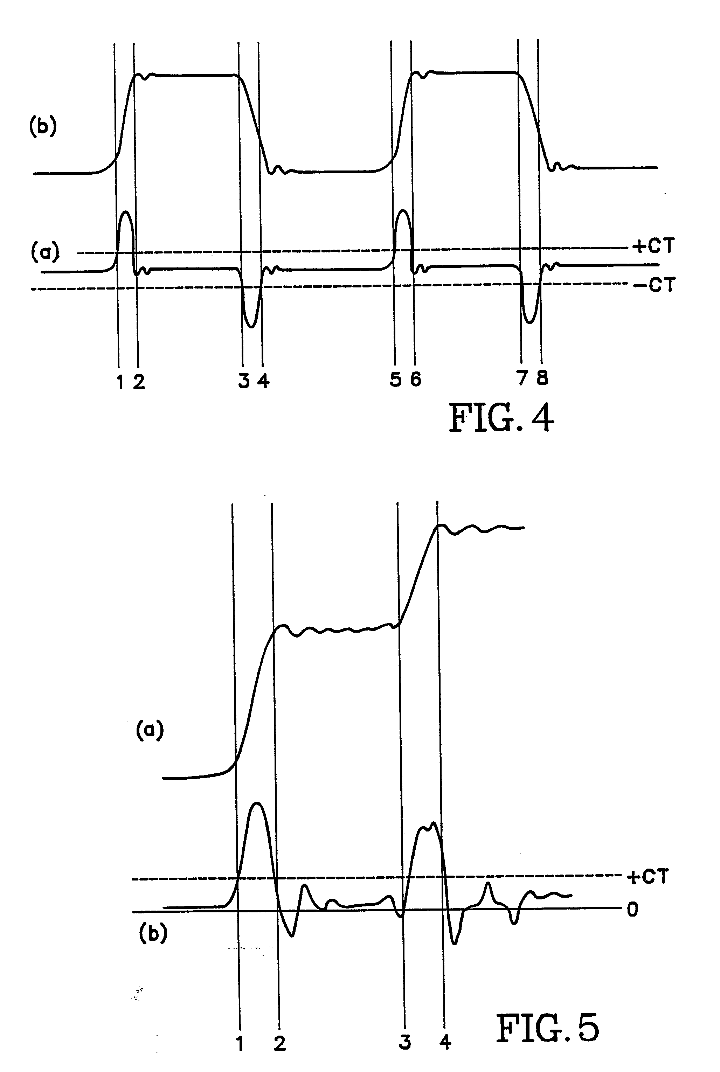

A request for correction of the figures 4 and 5 has been filed pursuant to Rule 88 EPC. A decision on the request will be taken during the proceedings before the Examining Division (Guidelines for Examination in the EPO, A-V, 2.2).

(30) Priority: 30.01.89 US 303704

(43) Date of publication of application:
08.08.90 Bulletin 90/32

(84) Designated Contracting States:
DE GB NL

(71) Applicant: TEKTRONIX, INC.
Howard Vollum Park 14150 S.W. Karl Braun Drive
Beaverton Oregon 97005(US)

(72) Inventor: Bonham, Betty A.
9570 S.W. Cypress
Beaverton, Oregon 97005(US)
Inventor: Tilden, Mark D.
4880 S.W. 192nd
Aloha, Oregon 97007(US)

(74) Representative: Burke, Steven David et al
R.G.C. Jenkins & Co. 26 Caxton Street
London SW1H 0RJ(GB)

(54) Improved method for determining topline and baseline of waveforms using differentiation.

(57) An improved method of finding the topline and baseline of a digitized waveform entails smoothing the original waveform, taking the derivative of the smoothed waveform to produce a derivative waveform, smoothing the derivative waveform, identifying the most important peaks in the smoothed derivative waveform, locating the points where these important peaks cross a threshold, for each crossing point recording in a table whether it was crossing the positive threshold or the negative threshold and whether it was crossing that threshold in a positive-going direction or a negative-going direction, and then using the information in this table to classify all of the points on the original waveform into one of the following seven categories: ignore points, topline points, topline-end points, topline-begin points, baseline points, baseline-end points, or baseline-begin points. Then, the topline value is calculated by averaging the points in the topline group unless there are none, in which case averaging the points in the topline-end group and/or the topline-begin group unless there are none in either of these groups, in which case the maximum value of the whole waveform is used as the topline value. The baseline value is calculated by an analogous procedure.

FIG.3

## IMPROVED METHOD FOR DETERMINING TOPLINE AND BASELINE OF WAVEFORMS USING DIFFERENTI-ATION

### Background of the Invention

This invention relates to the field of automated signal measurement and analysis, and more particularly to the field of computer algorithms for determining the topline and baseline of a digitized waveform using differentiation.

Oscilloscope users frequently wish to make measurements of acquired waveforms, such as finding the rise time. Typically, a rise time is measured between the 10% point and the 90% point on the waveform of interest. However, to make such a measurement, one must have some way of ascertaining where the 0% and 100% levels of the waveform are, i.e., the topline and baseline of the waveform. The experienced technician can intuitively "eye-ball" a reasonable estimate of the location of the top and the bottom of the waveform that he or she is measuring, but automated solutions to this problem have remained prone to failing in the face of unexpected waveform shapes.

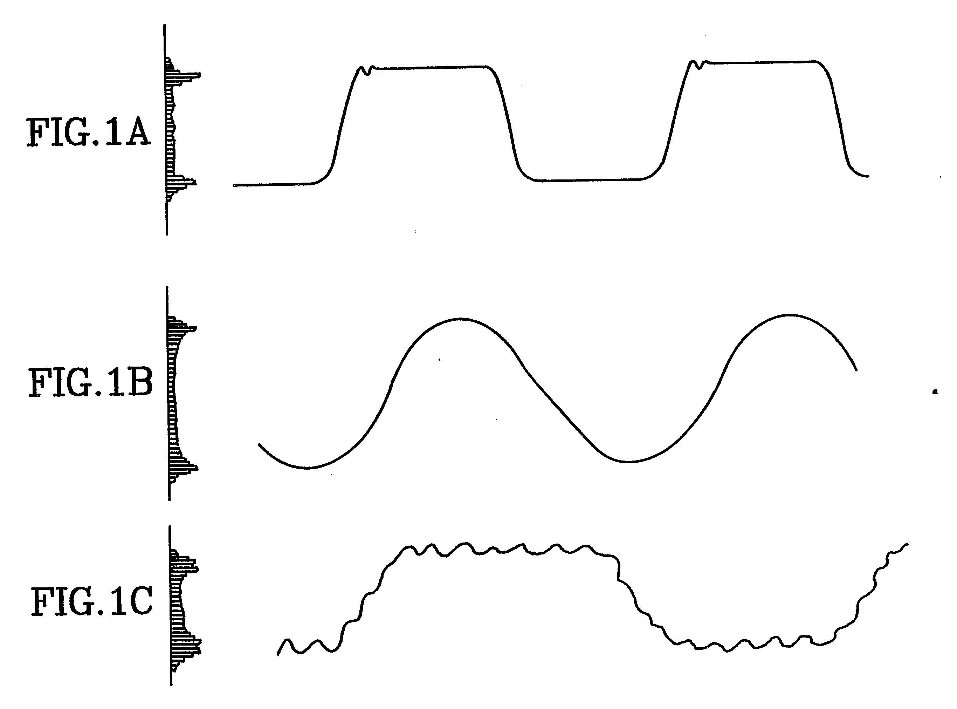

The most commonly employed automated approach to finding the topline and baseline of digitized waveforms relies on histograms to reveal their location. For most well-behaved waveforms, simply counting the different vertical (voltage) values for every point on the waveform produces a histogram with two maxima, with one at the topline and the other at the baseline. Refer to Fig. 1A, which shows a histogram of the vertical values of a square wave, and Fig. 1B, showing the same approach applied to a sine wave.

As can be seen in Fig. 1C, however, for some less well-behaved waveforms, the histogram results are prone to an arbitrary jitter in the result. The underlying square wave in Fig. 1C is carrying a higher frequency sinusoidal component, which causes it to produce double peaks in the histogram at both the top and bottom of the waveform. These double peaks arise from the longer time spent at the top and bottom of the sine wave, just as they did in Fig. 1B. And, since each of these double peaks may show up as the larger at any particular moment due to the effects of noise, the calculated topline and baseline results will each randomly jitter between two values, causing calculations based on these values to be disconcertingly non-repeatable.

An alternative to the histogram approach for determining the topline and baseline of a digitized waveform is the differentiation approach. In general, this approach entails differentiating the waveform and then making decisions about the location of representative regions of the top and base of the original waveform from the information in the differentiated waveform.

A particular approach, one that is the closest known prior art to the instant invention, entailed calculating the discrete derivative of the original waveform over the region of interest, smoothing this waveform by averaging every point in it with the set of points in a small region centered around that point, identifying the maxima and minima in the smoothed derivative waveform as places where the original waveform is rising or falling, and using an average of the values in the original waveform that lie outside of the rising and falling regions as the topline and baseline values.

While this approach works adequately for waveforms that include more than one full cycle of a repetitive signal, it cannot deal with some other types of waveforms, such as a waveform that only contains two levels and one transition. For this sort of non-repetitive signal, a more robust and general method of automated waveform analysis is needed.

### Summary of the Invention

The present invention is an improved method of using the information in the first derivative of a digitized waveform so that the topline and baseline of a broad class of waveforms may be determined, even non-repetitive waveforms with only one transition between two levels.

This improved method, in its fullest form, entails smoothing the original waveform, taking the derivative of the smoothed original waveform to produce a derivative waveform, smoothing the derivative waveform, identifying the most important peaks in the smoothed derivative waveform, locating the points where these important peaks cross a threshold, for each crossing point recording in a table whether it was crossing the positive threshold or the negative threshold and whether it was crossing that threshold in a positive-going direction or a negative-going direction, and then using the information in this table to classify all of the points on the original waveform into one of the following seven categories: ignore points, topline points, topline-end points, topline-begin points, baseline points, baseline-end points, or baseline-begin points.

Then, the topline value is calculated by averaging the points in the topline group unless there are none, in which case averaging the points in the topline-end group and/or the topline-begin groups unless there are no points in either of these groups, in which case the maximum value of all of the points in the original waveform is used as the topline value. Similarly, the baseline value is calculated by averaging the points in the baseline group unless there are none, in which case averaging the points in the baseline-end group and/or the baseline-begin groups unless there are no points in either of these groups, in which case the minimum value of all of the points in the original waveform is used as the baseline value.

## Brief Description of the Drawings

FIG. 1A is an example of a histogram approach to finding the topline and baseline of a square wave.

FIG. 1B is an example of a histogram approach to finding the topline and baseline of a sine wave.

FIG. 1C is an example of a histogram approach to finding the topline and baseline of a square wave distorted by a higher frequency sine wave component.

FIG. 2 is a block diagram of digital oscilloscope embodying the present invention.

FIG. 3 is a flow chart of the method of the invention.

FIG. 4 shows a digitized waveform (a) and a corresponding derivative waveform (b).

FIG. 5 shows a digitized waveform (a) having three levels, two positive-going transitions, and no negative-going transitions, and a corresponding derivative waveform (b).

## Detailed Description

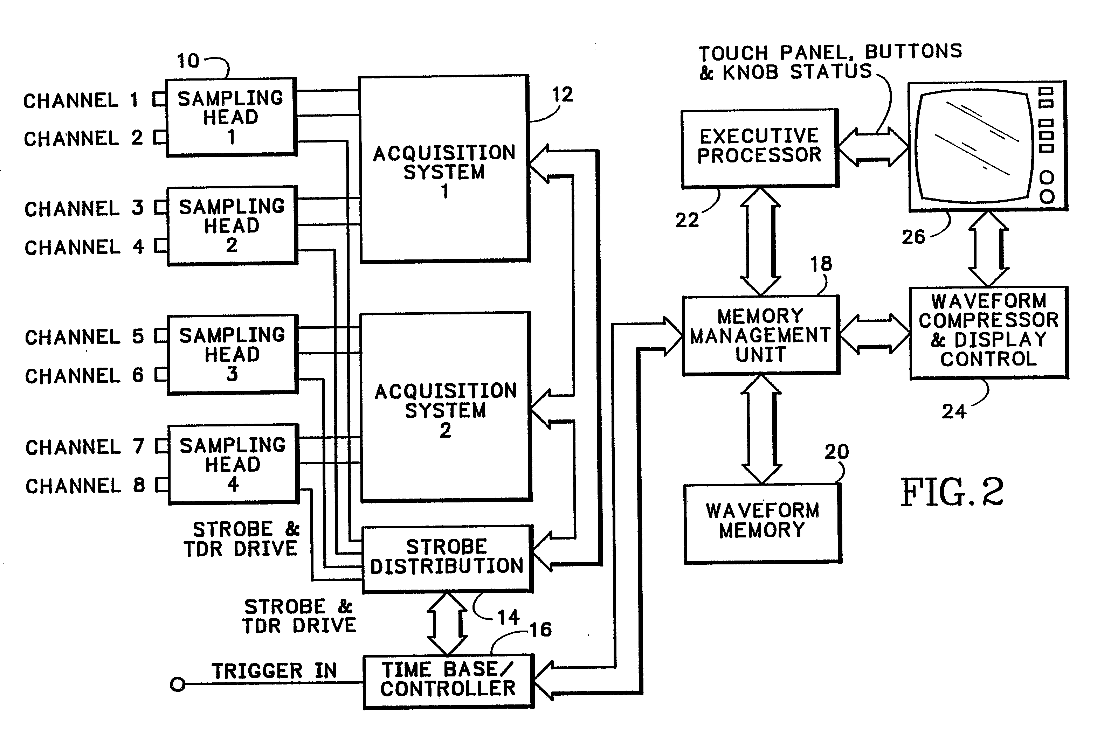

Referring to Fig. 2, a digital oscilloscope samples and acquires digital data representing the activity of repetitive waveforms or other signals of interest in a system under test using sampling heads 10 and acquisition systems 12 in accordance with strobe signals from the strobe distribution circuitry 14 under the control of the time base/controller 16. Acquired data representing the activity of the waveform being monitored is transferred to the waveform memory 20 by the memory management unit 18. Calculations of various waveform parameters are made by the executive processor 22 in accordance with operator input from the user interface 26. Processed waveforms and the results of calculations are sent to the waveform processor and display control circuitry 24 for display at the user interface 26.

The method of the present invention is used by the executive processor 22 to automatically compute the topline and baseline values of waveforms stored in the waveform memory 20.

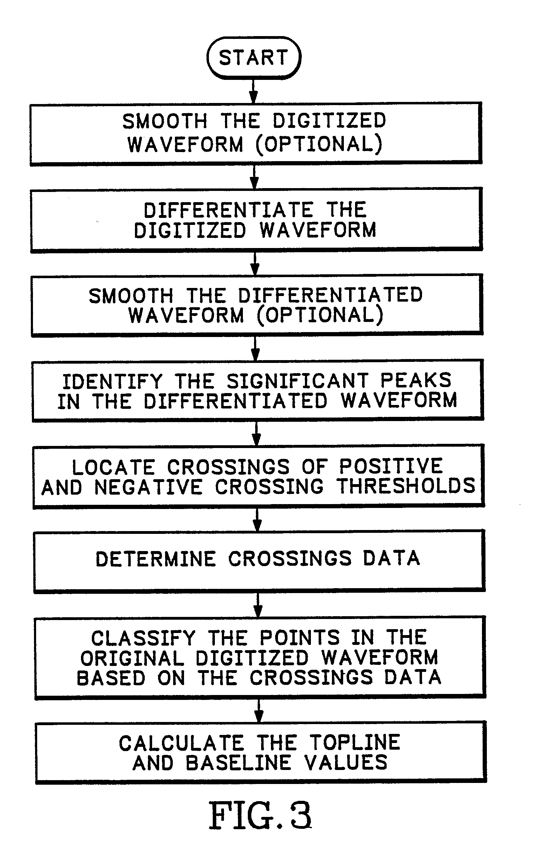

Referring to Fig. 3, the procedure of the present invention consists of eight steps, two of which are optional. These eight steps are: smoothing the digitized waveform (optional), differentiating the (smoothed) digitized waveform, smoothing the differentiated waveform (optional), identifying significant peaks in the (smoothed) differentiated waveform, locating crossings of positive and negative crossing thresholds, determining crossings data, classifying all of the points in the original digitized waveform based on their relationship to the crossing points data, and then calculating the topline and baseline values based on this classification of those points.

Starting with a digitized waveform, consisting of a plurality of amplitude values at a plurality of corresponding times, a smoothing process may be applied to eliminate high-frequency noise components. A simple way to accomplish this smoothing digitally is to calculate a moving average value at each point and substitute the moving average value for the raw data value at that point. This has the effect of low pass filtering any signals present. 2% of the number of points in the overall waveform, 1% on each side of the point in question, is a suitable number of points for inclusion in the calculation of this moving average when the digitized waveform has at least 100 samples per cycle. But the number of points to be included in the moving average is somewhat arbitrary, depending on the typical applications anticipated. For undersampled waveforms (i.e., those with less than 100 samples per cycle), the smoothing process may result in reduced amplitude and loss of detail in the smoothed waveform. An alternative way to accomplish smoothing is to average a number of digitized waveforms so that any noise present cancels out.

Referring to Fig. 4, the smoothed digitized waveform (a) is differentiated to produce a derivative waveform (b). This can be accomplished using a 3-point discrete derivative of the form:

P-deriv = ( P(n + 1) - P(n-1) )/2

It is not necessary to divide the result by the delta between points, since it is a constant and the absolute scaling of this derivative is irrelevant to the process that follows. At the end-points of the digitized waveform, a 2-point derivative is used that is simply the difference between the end-point and the adjacent point.

The resulting derivative waveform may also be smoothed using the either the moving average technique or by averaging a number of derivative waveforms, each based on separate (smoothed or unsmoothed) digitized waveforms. If the moving average technique is used, 1% of the number of points in the overall waveform is the most suitable number of points for inclusion in the calculation of this moving average. Including 1% of the points in this moving average is sufficient to reduce the effects of short-term noise in the derivative without adversely affecting the true peaks in the derivative that indicate areas of a high rate of change in the original waveform.

The smoothed derivative waveform is next searched for the largest positive peak and largest negative peak, and the maximum peak-to-peak value is calculated as the difference between these. This maximum peak-to-peak value is used to help identify the significant peaks in the derivative waveform. Each peak in the derivative waveform is measured relative to zero, and its peak value is then compared to a percentage of the maximum peak-to-peak value. While this qualifying threshold percentage is somewhat arbitrary, a suitable value is 30%. Thus, if a particular peak on the derivative waveform has a peak value equal to or greater than the maximum peak-to-peak value over the whole derivative waveform, it is deemed to be "significant". That is, it probably represents a real transition between levels in the original digitized waveform. All peaks that are not deemed to be significant are ignored in the steps that follow.

The largest positive significant peak value is now multiplied by another fixed factor, which is also 30% in the preferred embodiment, to produce a "positive crossing threshold", shown as the dotted line "+CT" in Fig. 4. Similarly, the largest negative significant peak value is multiplied by the same fixed factor to produce a "negative crossing threshold", shown as the dotted line "-CT" in Fig. 4.

The derivative waveform is then searched for crossings through these "crossing thresholds" and the results are recorded in a table. For each entry in this table there are the horizontal location of the point and an entry indicating two things: which crossing threshold is being crossed at this location, and whether the crossing is in a positive-going direction or a negative-going direction.

For the derivative waveform shown in Fig. 4 these entries are as follows, using the arbitrary numbers 1-8 across the bottom as horizontal locations for this example:

| LOCATION | THRESHOLD | DIRECTION |
|----------|-----------|-----------|
| 1 | + | + |
| 2 | + | - |
| 3 | - | - |
| 4 | - | + |
| 5 | + | + |
| 6 | + | - |
| 7 | - | - |
| 8 | - | + |

The entries in this table are then used to classify all of the points in the original digitized waveform into one of the following seven groups:

points to be ignored, those between two adjacent crossing points that are both on the positive crossing threshold and those between two adjacent crossing points that are both on the negative crossing threshold;

topline points, those after negative-going crossings through the positive crossing threshold if the next crossing point is a negative-going crossing through the negative crossing threshold;

topline-end points, those after a last crossing point that is a negative-going crossing through the positive crossing threshold;

topline-begin points, those before a first crossing point that is a negative-going crossing through the negative crossing threshold;

baseline points, those after a positive-going crossing through the negative crossing threshold if the next crossing point is a positive-going crossing through the positive crossing threshold;

baseline-end points, those after a last crossing point that is a positive-going crossing through the negative crossing threshold;

baseline-begin points, those before a first crossing point that is positive-going crossing through the positive crossing threshold.

For example, the points on the original digitized waveform (a) to the left of the solid vertical line at horizontal location 1 fit the definition of "baseline-begin points", so their values are put in that group. The points on the original digitized waveform (a) that are between the crossing points at the horizontal locations identified with the vertical lines 1 and 2 are "points to be ignored", so their values are discarded. Similarly, the points between 3 and 4, 5 and 6, and 7 and 8 are all also "points to be ignored".

Continuing with this classification process, the points between 2 and 3 fit the definition of "topline points", as do those between 6 and 7. The points between 4 and 5 are "baseline" points, while those after 8, the last crossing point that is a positive-going crossing through the negative crossing threshold, are properly classified as "baseline-end points".

Then, the procedure for calculating the topline value is to average the points in the topline group unless there are no points in the topline points group, in which case average the points in the topline-end points group unless there are no points in the topline-end points group, in which case average the points in the topline-begin points group unless there are no points in the topline-begin points group, in which case use the maximum value of all of the points as the topline.

And, similarly, the procedure for calculating the baseline value is to average the points in the baseline points group unless there are no points in the baseline points group, in which case average the points in the baseline-end points group unless there are no points in the baseline-end points group, in which case average the points in the baseline-begin points group unless there are no points in the baseline-begin points group, in which case use the minimum value of all of the points as the baseline.

The preference for end points over begin points is arbitrary and might well vary with the nature of the data anticipated. Begin points could be used first and end points used only if there were no begin points. Alternatively, both end points and begin points could be used, in which case the original classification scheme could be simplified so as to never distinguish between the two by keeping them separate. Also, some other operation, such as taking the median, could be used instead of simple averaging. The central idea remains the same: to sort the points in the manner described and then use them to calculate, by whatever means, the desired topline and baseline references from which to make further measurements or perform additional calculations on the rest of the waveform.

When the method of the invention is applied to the example shown in Fig. 4, there are points in both the "topline points" group and the "baseline points" group, and the calculation is quite straight forward.

Referring now to Fig. 5, for waveforms that are not repetitive or do not complete one full cycle within the acquired data, the advantages inherent in the approach of the present invention emerge more clearly. The digitized original waveform (a) has three levels and two positive-going transitions, but no negative-going transitions and is not repetitive. This waveform is therefore not amenable to topline/baseline analysis by the differential techniques of the prior art. It is also not amenable to analysis by the histogram technique, since the large flat section in the center of the waveform generates a peak in the histogram that is likely to be interpreted as a topline or baseline peak. If the size of the peak in the histogram associated with this region is the same size as the peaks in the histogram associated with the flat regions at the true top and bottom of the waveform, the solution provided by the histogram algorithm may jump or oscillate between this flat region and the actual top or bottom.

The method of the present invention handles this case quite well. First, note that none of the negative-going peaks on the derivative waveform (b) qualified as "significant", i.e., their departure from zero was not 30% of the maximum peak-to-peak value of the derivative waveform. Hence, there is no "negative threshold", since its calculation is based on the largest of the significant negative peaks. Hence, the table of crossings data only has four points, all across the positive threshold:

| LOCATION | THRESHOLD | DIRECTION |
|----------|-----------|-----------|
| 1 | + | + |
| 2 | + | - |
| 3 | + | + |
| 4 | + | - |

The points on the original waveform to the left of the first crossing point 1 fit the definition of "baseline-begin points". The points to the right of the last crossing point 4 fit the definition of "topline-end points". All of the rest of the points, those between 2 and 4, as well as those between 1 and 2 and 3 and 4, are all "between two adjacent crossing points that are both on the positive crossing threshold" and are therefore "points to be ignored" according to the definitions given above.

Now, the baseline is calculated using only the "baseline-begin points", since there are no "baseline points" or "baseline-end points". And, the topline is calculated using only the "topline-end points", since there were no "topline points". Thus, the algorithm of the present invention operates successfully to find the correct topline and baseline for this non-repetitive and difficult waveform.

While a preferred embodiment of the present invention has been shown and described, it will be apparent to those skilled in the art that many changes and modifications may be made without departing from the invention in its broader aspects. The claims that follow are therefore intended to cover all such changes and modifications as fall within the true spirit and scope of the invention.

**Claims**

1. A method for determining the topline and baseline of a digitized waveform having a plurality of points, the method comprising the steps of:

differentiating the digitized waveform to produce a derivative waveform having a plurality of points corresponding to the plurality of points in the digitized waveform;

identifying significant positive and significant negative peaks in the derivative waveform;

locating crossing points where the significant positive peaks cross a positive crossing threshold and the significant negative peaks cross a negative crossing threshold;

determining for each of the crossing points whether the crossing point is on the positive crossing threshold or the negative crossing threshold and whether the derivative waveform at the crossing point was positive-going or negative-going;

classifying each point in the digitized waveform into one of the following five groups using the determined information for each of the crossing points:

    points to be ignored, those between two adjacent crossing points that are both on the positive crossing threshold and those between two adjacent crossing points that are both on the negative crossing threshold;

    topline points, those after negative-going positive crossing points if the next crossing point is a negative-going crossing point on the negative crossing threshold;

    topline-end and topline-begin points, those after a last crossing point that is a negative-going crossing point on the positive crossing threshold, and those before a first crossing point that is a negative-going crossing point on the negative crossing threshold;

    baseline points, those after a positive-going negative crossing point if the next crossing point is a positive-going crossing point on the positive crossing threshold;

    baseline-end and baseline-begin points, those after a last crossing point that is a positive-going crossing point on the negative crossing threshold, and those before a first crossing point that is positive-going crossing point on the positive crossing threshold;

calculating the topline from the points in the topline group unless there are no points in the topline points group, in which case calculating the topline from the points in the topline-end and topline-begin points group unless there are none, in which case using the maximum value of all of the points as the topline; and

calculating the baseline from the points in the baseline points group unless there are no points in the baseline points group, in which case calculating the baseline from the points in the baseline-end and baseline-begin points group unless there are none, in which case using the minimum value of all of the points as the baseline.

2. A method as recited in claim 1 wherein the identifying step comprises the steps of:

locating the maximum and minimum points in the derivative waveform;

subtracting the value of the minimum point in the derivative waveform from the value of the maximum point in the derivative waveform to produce a maximum peak-to-peak value of the derivative waveform;

finding significant positive peaks and significant negative peaks in the derivative waveform by comparing their absolute values relative to zero with a qualifying threshold percentage of the maximum peak-to-peak value of the derivative waveform;

3. A method as recited in claim 1 further comprising the step of smoothing the digitized waveform, said smoothing step being performed prior to the step of differentiating the digitized waveform.

4. A method as recited in claim 1 further comprising the step of smoothing the derivative waveform, said smoothing step being performed prior to the step of identifying significant positive and significant negative peaks.

5. A method as recited in claim 1 wherein the differentiating step comprises subtracting the value at the

EP 0 381 419 A2

present location minus one from the value at the present location plus one and dividing the result by two, except at the ends of the digitized waveform where the value of the point on the derivative waveform is the difference between the value of endpoint and the value of the point adjacent to the endpoint.

6. A method as recited in claim 1 wherein one or both of the calculating steps comprises averaging the points in the groups being used to perform the calculation.

7. A method as recited in claim 1 wherein one or both of the calculating steps comprises taking the median of the points in the groups being used to perform the calculation.

8. A method for determining the topline and baseline of a digitized waveform having a plurality of points, the method comprising the steps of:

differentiating the digitized waveform to produce a derivative waveform having a plurality of points corresponding to the plurality of points in the digitized waveform;

identifying significant positive and significant negative peaks in the derivative waveform;

locating crossing points where the significant positive peaks cross a positive crossing threshold and the significant negative peaks cross a negative crossing threshold;

determining for each of the crossing points whether the crossing point is on the positive crossing threshold or the negative crossing threshold and whether the derivative waveform at the crossing point was positive-going or negative-going;

classifying each point in the digitized waveform into one of the following seven groups using the determined information for each of the crossing points:

  points to be ignored, those between two adjacent crossing points that are both on the positive crossing threshold and those between two adjacent crossing points that are both on the negative crossing threshold;

  topline points, those after negative-going positive crossing points if the next crossing point is a negative-going crossing point on the negative crossing threshold;

  topline-end points, those after a last crossing point that is a negative-going crossing point on the positive crossing threshold;

  topline-begin points, those before a first crossing point that is a negative-going crossing point on the negative crossing threshold;

  baseline points, those after a positive-going negative crossing point if the next crossing point is a positive-going crossing point on the positive crossing threshold;

  baseline-end points, those after a last crossing point that is a positive-going crossing point on the negative crossing threshold;

  baseline-begin points, those before a first crossing point that is positive-going crossing point on the positive crossing threshold;

calculating the topline from the points in the topline group unless there are no points in the topline points group, in which case calculating the topline from the points in the topline-end points group and/or the topline-begin points group unless there are no points in the topline-end points group or the topline-begin points group, in which case using the maximum value of all of the points as the topline; and

calculating the baseline from the points in the baseline points group unless there are no points in the baseline points group, in which case calculating the baseline from the points in the baseline-end points group and/or the baseline-begin points group unless there are no points in the baseline-end points group or the baseline-begin points group, in which case using the minimum value of all of the points as the baseline.

9. A method as recited in claim 8 wherein the identifying step comprises the steps of:

locating the maximum and minimum points in the derivative waveform;

subtracting the value of the minimum point in the derivative waveform from the value of the maximum point in the derivative waveform to produce a maximum peak-to-peak value of the derivative waveform;

finding significant positive peaks and significant negative peaks in the derivative waveform by comparing their absolute values relative to zero with a qualifying threshold percentage of the maximum peak-to-peak value of the derivative waveform;

10. A method as recited in claim 8 further comprising the step of smoothing the digitized waveform, said smoothing step being performed prior to the step of differentiating the digitized waveform.

11. A method as recited in claim 8 further comprising the step of smoothing the derivative waveform, said smoothing step being performed prior to the step of identifying significant positive and significant negative peaks.

12. A method as recited in claim 8 wherein the differentiating step comprises subtracting the value at the present location minus one from the value at the present location plus one and dividing the result by two, except at the ends of the digitized waveform where the value of the point on the derivative waveform is the difference between the value of endpoint and the value of the point adjacent to the endpoint.

7

13. A method as recited in claim 8 wherein one or both of the calculating steps comprises averaging the points in the groups being used to perform the calculation.

14. A method as recited in claim 8 wherein one or both of the calculating steps comprises taking the median of the points in the groups being used to perform the calculation.

FIG.1A

FIG.1B

FIG.1C

EP 0 381 419 A2

FIG.2

CHANNEL 1 — SAMPLING HEAD 1 (10)
CHANNEL 2

CHANNEL 3 — SAMPLING HEAD 2
CHANNEL 4

CHANNEL 5 — SAMPLING HEAD 3
CHANNEL 6

CHANNEL 7 — SAMPLING HEAD 4
CHANNEL 8

STROBE & TDR DRIVE

ACQUISITION SYSTEM 1 (12)

ACQUISITION SYSTEM 2

STROBE DISTRIBUTION (14)

STROBE & TDR DRIVE

TRIGGER IN — TIME BASE/ CONTROLLER (16)

TOUCH PANEL, BUTTONS & KNOB STATUS

EXECUTIVE PROCESSOR (22)

MEMORY MANAGEMENT UNIT (18)

WAVEFORM MEMORY (20)

WAVEFORM COMPRESSOR & DISPLAY CONTROL (24)

(26)

EP 0 381 419 A2

```
          ┌─────────┐
          │  START  │
          └─────────┘
               │
               ▼
   ┌───────────────────────────┐
   │   SMOOTH THE DIGITIZED     │
   │   WAVEFORM (OPTIONAL)      │
   └───────────────────────────┘
               │
               ▼
   ┌───────────────────────────┐
   │    DIFFERENTIATE THE       │
   │    DIGITIZED WAVEFORM      │
   └───────────────────────────┘
               │
               ▼
   ┌───────────────────────────┐
   │ SMOOTH THE DIFFERENTIATED  │
   │   WAVEFORM (OPTIONAL)      │
   └───────────────────────────┘
               │
               ▼
   ┌───────────────────────────┐
   │ IDENTIFY THE SIGNIFICANT   │
   │ PEAKS IN THE DIFFERENTIATED│
   │        WAVEFORM            │
   └───────────────────────────┘
               │
               ▼
   ┌───────────────────────────┐
   │ LOCATE CROSSINGS OF        │
   │ POSITIVE AND NEGATIVE      │
   │ CROSSING THRESHOLDS        │
   └───────────────────────────┘
               │
               ▼
   ┌───────────────────────────┐
   │ DETERMINE CROSSINGS DATA   │
   └───────────────────────────┘
               │
               ▼
   ┌───────────────────────────┐
   │ CLASSIFY THE POINTS IN THE │
   │ ORIGINAL DIGITIZED WAVEFORM│
   │ BASED ON THE CROSSINGS DATA│
   └───────────────────────────┘
               │
               ▼
   ┌───────────────────────────┐
   │ CALCULATE THE TOPLINE      │
   │ AND BASELINE VALUES        │
   └───────────────────────────┘
```

# FIG.3

(b)

(a)

+CT

−CT

1 2          3 4          5 6          7 8

# FIG. 4

(a)

+CT

0

(b)

1     2          3     4

# FIG. 5